# NEW EUROPEAN PATENT SPECIFICATION

(11) **EP 1 921 924 B2**
(45) Date of publication and mention of the opposition decision: **18.07.2018**
(45) Mention of the grant of the patent: 07.01.2009
(21) Application number: 06777132.9
(22) Date of filing: 31.08.2006
(51) Int. Cl.: A23G 1/30, A23G 1/32, A23G 1/36, A23G 1/40, A23G 1/44, A23G 3/34, A23L 33/21

(54) **LOW-FAT CONFECTIONERY PRODUCT BEING A WATER-IN-OIL EMULSION**
FETTARMES KONFEKT IN FORM EINER WASSER-IN-ÖL-EMULSION
PRODUIT DE CONFISERIE À FAIBLE TENEUR EN MATIÈRE GRASSE SOUS LA FORME D'ÉMULSION D'EAU DANS L'HUILE

(30) Priority: 31.08.2005 EP 05107975
(43) Date of publication of application: 21.05.2008
(73) Proprietor: Nestec S.A., 1800 Vevey (CH)
(72) Inventor: REY, Brigitte, CH-1618 Châtel-St- Denis (CH); ROSSI-VAUTHEY, Patricia, CH-1071 Rivaz (CH); ROUSSET, Philippe, CH-1040 Echallens (CH); SCHAFER, Olivier, CH-1066 Epalinges (CH)
(74) Representative: Lumsden, Stuart Edward Henry
(86) International application number: PCT/EP2006/008526
(87) International publication number: WO 2007/025756

(56) References cited:
- EP-A1- 0 011 344
- EP-A1- 0 515 864
- EP-A1- 0 547 658
- EP-A1- 1 759 591
- EP-A1- 1 875 810
- EP-A2- 0 333 510
- EP-A2- 0 397 247
- EP-A2- 0 808 580
- WO-A1-95/07027
- WO-A1-95/24831
- WO-A1-2004/017744
- WO-A1-2004/028281
- WO-A2-02/30212
- WO-A2-2007/025757
- GB-A- 1 293 476
- US-A- 5 102 680
- US-A- 5 425 957
- US-H- H1 527
- MORAN D.P.J. ET AL: 'Fats In Food Products', 1994, BLACKIE ACADEMIC & PROFESSIONAL, LONDON pages 163 - 167
- HEGENBART S.: 'Maintaining harmony in the base; It may be true that oil and water don't mix, but that was before emulsofiers' DAIRY FOODS February 1990, pages 83 - 85

## Description

### Field of the invention

The present invention relates to confectionery products with low fat or very low fat contents.

### Background of the invention

Confectionery products such as chocolates, pralines or the like are fat-based products that are well appreciated by consumers. The fat content of a chocolate may vary from about 25% to about 40% by weight depending on whether it is plain, milk or white chocolate but is usually from about 30% to 34% by weight based on the total weight of the chocolate. Therefore, as a growing proportion of consumers try to limit their intake of fat and/or calories, many attempts have been made by the Confectionery Industry to lower the fat and calorie contents of said confectionery products.

Examples of such attempts include processing tricks, replacement of sugar by sugar replacers such as polyols and/or polydextroses, use of special fats, or use of special emulsifiers.

Other approaches have been made using emulsions.
For example, Lotte patent EP 440 203 discloses an emulsified composition characterized in that it has a structure in which a hydrophilic anhydrous solid material and a water-containing food material independently coexist in oil in a state of fine particles respectively. The hydrophilic anhydrous solid material (25-70%) is one of solid sugars, milk products and starches, the water-containing food material (2-40%) is for example a juice or a milk product, the oil (25-65%) can be cocoa butter, and the emulsified composition can be a center cream for chocolates and the like. The problem solved by this invention is to provide an emulsified composition and a production method thereof, which is a food article containing water such as fruit juice, vegetable juice, yogurt, raw eggs, liquor and the like and the hydrophilic anhydrous solid material, having a structure in which the hydrophilic anhydrous solid material and the water-containing food article coexist in oil in a stable state, and having the very delicious and smooth mouth-feel maintaining the original taste and flavour of the water-containing food article.

US 5 776 536 discloses a reduced fat chocolate comprising defatted chocolate and lipid vesicles (50-90% wt), the lipid vesicles being paucilamellar preferably having 2-10 bilayers surrounding a central cavity, and comprising a lipid phase (20-40% wt) including a surfactant, and an aqueous phase (60-80% wt) comprising a sweetener. The problem solved by this invention is to have a simpler method of making low fat chocolate but retaining the pleasure and taste of chocolate.

WO 2004/028 281 discloses a product taken from the group consisting of a foam, an emulsion, a foamed emulsion, a dispersed emulsion and a foamed emulsion, wherein the interface water-air, water-oil or water-solid comprises a complex formed instantaneously at said interface by the mixture of at least a protein (or peptide) and at least a polysaccharide oppositely charged or the mixture of two proteins oppositely charged, said product being in a pH range within which the electrostatic interaction between both compounds oppositely charged occurs and wherein the total amount of protein and polysaccharide is comprised between 0.01 and 5% in weight. The product can be used in chocolate, representing from 10-100% of said chocolate. The patent application further discloses stabilised co-emulsions and stabilized co-emulsions and co-suspensions.

EP 986 959 discloses a coating for frozen confectionery which is a water-in-oil emulsion comprising 60-80% of a water phase, 20-35% of a fat phase and 0.5-8% of an emulsifier, the water phase comprising 10-70% carbohydrates. The problem solved by this invention is to have a coating based on a water-in-oil emulsion which has texture and flavour properties superior to that of conventional fat-based coatings and significantly better keeping properties, softness, e.g. less brittleness and better adhesion to frozen confectionery.

Still other approaches have been made using dispersions.
One example is EP 522 704 disclosing a chocolate food product which has been modified in its properties by the inclusion of an aqueous sugar solution of micro particularized cocoa, wherein 100% of the hydrated cocoa particles have a particle size of 0.1 to 20 microns, with an average mean particle size of 2 to 7 (commercial cocoa powders have an average particle size of typically 75 microns). The hydrated micro particles of cocoa are dispersed uniformly throughout an aqueous sugar paste which contains 10-30% cocoa as described above, 15-75% sugar and 20-55% water, and has a water activity (Aw) of 0.80 to 0.90. The problem solved by this invention is to have a new form of micro particularized cocoa paste having a low water content, low fat and improved flavour.

However, none of the attempts described above provide a low-fat confectionery product having both a rich cocoa flavour mimicking the flavour of regular chocolates, and a mouthfeel mimicking the texture of regular chocolates, in particular leading to similar melting, firmness and snapping characteristics.

### Summary of the Invention

The present invention concerns a low-fat confectionery product according to claim 1. The present invention covers a low-fat confectionery product consisting of a water-in-oil emulsion comprising 6-20% fat phase, 60-90% aqueous phase, cocoa particles dispersed in fat, and a structuring agent. The invention further relates to processes of manufacture of said low fat confectionery product.

### Detailed Description of the Invention

In the present specification and examples, all percentages are expressed by weight unless otherwise mentioned.
According to the present invention, the low-fat confectionery product may be a chocolate, a chocolate-like (e.g. comprising cocoa butter replacers, or cocoa-butter equivalents), a coating chocolate, a coating chocolate for ice-creams, a praline, a chocolate filling, a fudge, a chocolate cream, a refrigerated chocolate cream, an extruded chocolate product, or the like. The low-fat confectionery product may be in form of an aerated product, a bar, or a filling, among others. It may also be inclusions, chocolate layers, chocolate nuggets, chocolate pieces, chocolate drops, or shaped chocolates, such as in the form of letters of the alphabet and numbers, dinosaurs, cars, and the like. The low-fat confectionery product may further contain crispy inclusions e.g. cereals, like expanded or toasted rice or dried fruit pieces which are preferably coated in moisture barriers to delay the absorption of moisture from the low-fat confectionery product

In the present specification, the term "fat phase" has to be understood as including any solid and/or liquid ingredient miscible with oil or fat or that has the capacity to dissolve in oil or fat at ambient temperature, and "aqueous phase" as any solid and/or liquid ingredient miscible with water or that has the capacity to dissolve in water at ambient temperature. For example, the fat phase may comprise lipophilic sucrose esters, and the aqueous phase may comprise sugars. Insoluble particles, such as cocoa powder, calcium carbonate, titan dioxide or particulate starch do not belong neither to the fat phase nor to the aqueous phase.

In the present specification, the term "structuring agent" has to be understood as a component having the capacity to bind and /or structure water. Structuring agents of the present invention are limited to polysaccharides and/or proteins.

The structuring agent is important as it allows gelation of water droplets, which is an essential characteristic of the present invention. The structuring agent can be taken form the group consisting of carrageenans, pectins, gellan, gelatines, guar, acacia gum, sodium alginate, xanthan gum or globular proteins such as those contained in a whey protein isolate, an egg white protein isolate, a soy protein isolate or any other globular protein isolate from an animal or vegetal source. It can also be a combination of some of the afore-mentioned structuring agents.

The low-fat confectionery is a water-in oil emulsion. Preferably, it comprises a preservative, which is an ingredient that limits or prevents microorganism growth, in particular bacterial growth, such as sorbic acid, potassium sorbate, calcium sorbate, benzoic acid, sodium benzoate, calcium benzoate, potassium benzoate, ethyl-p-hydroxybenzoate, sodium ethyl-p-hydroxybenzoate, propyl-p-hydroxybenzoate, sodium propyl-p-hydroxybenzoate, methyl-p-hydroxybenzoate, sodium methyl-p-hydroxybenzoate. Furthermore, the system can be acidified with for example: lactic acid, citric acid, ascorbic acid or any food-grade acid.

The low-fat confectionery product may comprise other ingredients, such as flavouring agents, colorants, or milk ingredients. The flavouring agents can add coffee flavours, or vanilla, raspberry, orange, mint, citrus, strawberry, apricot, lavender flavours, any mixture thereof, and any other fruit, nutty or flower flavouring agent, among others. The milk ingredients can be liquid milk or milk powder, either full fat, partially defatted or defatted, and delactosylated or not.

The low-fat confectionery product comprises sugars. These sugars include sucrose, fructose, sugar replacers such as polyols (e.g., maltitol, lactitol, isomalt, erythritol, sorbitol, mannitol, xylitol) or bulking agents like polydextrose or other sweeteners like tagatose or high intensity sweeteners like saccharin, aspartame, acesulfame-K, cyclamate, neohesperidin, thaumathin, sucralose, alitame, neotame or any combination thereof.

The low-fat confectionery product also comprises an emulsifier. The emulsifier stabilizes the droplet interface. Advantageously, the emulsifier may comprise sugar esters, polyglycerol fatty acid esters, polyglycerol polyricinoleate (PGPR), polysorbates (polyoxyethylene sorbitan esters), monoglycerides and combinations thereof. Preferred emulsifiers are sugar esters or polyglycerol polyricinoleate (PGPR). Even most preferred is the use of a hydrophilic emulsifier in combination with any other emulsifier cited above and even most preferred is the use of sodium stearoyl lactylate (SSL), for example the combination of SSL and sugar esters or PGPR, that is believed to improve the melting characteristics of the low-fat confectionery product of the invention.

The fat can be cocoa butter, cocoa butter substitute, cocoa butter replacers, cocoa butter improvers or cocoa butter equivalents, among others.
Cocoa butter substitute is a lauric fat obtained from the kernel of the fruit of palm trees obtained by fractionation and/or hydrogenation of palm kernel oil. It comprises about 55% lauric acid, 20% myristic acid and 7% oleic acid, cocoa butter substitutes can not be mixed with cocoa butter.
The cocoa butter equivalents are vegetable fats with similar chemical and physical characteristics to cocoa butter, which are obtained by blending different fractions of other fats or by interesterification, and can be used interchangeably with cocoa butter in any recipe.
The cocoa butter replacers are formed by non lauric vegetable fats which may be mixed with cocoa butter but only in limited proportions: they have similar physical, but not chemical characteristics to cocoa butter. Cocoa butter replacers can be used in recipes partially based on cocoa mass or cocoa butter.
Cocoa butter improvers are harder cocoa butter equivalents which are not only equivalent in their compatibility but also improve the hardness of some of the softer qualities of cocoa butter.

The low-fat confectionery product of the present invention is a water-in-oil emulsion, wherein the aqueous phase represents at least 60% of the final product and the fat phase at most 20%. Preferably, the aqueous phase represents 60 to 90% of the product, or even more preferably 70-85%, and the fat phase represents 6 to 20% of the product, more preferably 6 to 15% or 6 to 13%.

The product therefore comprises a majority of water droplets in a fat continuous phase. Preferably, the droplets have a size, that is to say a diameter, of approximately 1-30 µm, preferably 1-15 µm. The inventors have found that this size of water droplets in a continuous oil phase comprising at least 85% water have surprising advantages, that consist in: first reducing the microbial development, second improving the stability of the emulsion, and third mimicking the sensory properties of regular chocolates.

The low-fat confectionery of the present invention comprises cocoa particles that can be associated (or not) with milk solids and/or starch. Examples of cocoa particles are cocoa powder, defatted cocoa powder, and solids of cocoa liquor.

Preferably, the low-fat confectionery product according to the third embodiment of the present invention has less than 15% fat, and comprises at least 4% cocoa powder. The structure of the low-fat confectionery product according to the invention has a firm structure provided both by fat crystals that form a continuous network, and by the droplets structure that acts as a load to reinforce the fat phase.

A preferred emulsifying agent is SSL, in combination with another emulsifier, as it has been surprisingly discovered by the inventors that the use of this emulsifier allows mimicking the smoothness of regular chocolate.

Structuring agent in the aqueous phase has several functionalities like control of viscosity during emulsification and stability against emulsion breakage of the product during storage but the most critical is that it allows a reinforcement of the structure of the droplets. This induces that the further incorporation of non-soluble particles is possible without breakage of the emulsion and that the overall final product structure is reinforced by having both the continuous fat crystal network and the gelled water droplets.

By doing so, high flexibility is possible for the production of chocolate. Cocoa solids can be added in the form of cocoa liquor or cocoa powder. In the case of the latter one, this allows to use any kind of fat like CBE, CBR, CBS and/or CBI as the continuous phase.
Another big advantage of the invention is that any type of sugar can be used without texture alteration. In fact as sugars are dissolved in the aqueous phase there is no textural change by a change in the sugar profile, contrary to what might happen in regular chocolates where melting profiles change dramatically when polyols are used for example.
This type of emulsion can also be used on standard chocolate manufacturing equipment.
In addition, we have found another advantage: when the chocolate emulsion of the present invention is adjusted at an acid pH like for example 5, in order to improve microbiological stability, acidity is not perceived in the product, which would be an alteration compared to standard regular chocolate.

The process for making the low-fat confectionery product according to the present embodiment of the invention comprises the following steps:
a) Mixing of the ingredients of the aqueous phase below 40°C
b) Heating of the aqueous phase at a temperature above 50°C, preferably at a temperature greaterthan 70°C,
c) Emulsification of the aqueous phase in the fat phase at a temperature above ambient, preferably at a temperature equal or greater than 50°C
d) Cooling the water-in-oil emulsion at a temperature above ambient
e) Adding particles in the oil phase of the water in oil emulsion.

The ingredients of the aqueous phase are water, structuring agents, sugars, preservatives, and aromas, for example. Preferred structuring agents are carrageenans.

Preferably, step b) is achieved at a temperature above 70°C to ensure the right hydration of the structuring agent whereas step c) is achieved at a temperature above the structuring point of the structuring agent.
It is recommended that the cooling of step d) is achieved at a temperature below the structuring temperature of the structuring agent.

In step e), particles are added. These particles can be cocoa powder, starch, milk powders, among others, or any combination thereof. Particles can be added as such or in suspension in a fat phase like for example cocoa liquor to incorporate cocoa powder. If the fat requires to be tempered, step e) can further comprise the addition of other fat tempering seeds or cocoa powder. For example, the fat tempering seeds can be Chocoseed® from Fuji oil, or cocoa butter or CBE seed crystals in the stable polymorph. Otherwise, fat (such cocoa butter contained in as cocoa liquor) can be tempered before its addition to the emulsion.

It is important for the purpose of the present embodiment that the aqueous phase is not gelled during droplet formation, but soon after in order to avoid a future destabilization of the emulsion. Furthermore, the aqueous phase droplets must be gelled before the addition of the particles otherwise the emulsion may break.
The low-fat confectionery product of the present invention presents a fat mouthfeel, a melting sensation and a firmness that are far better than the ones of the known low-fat confectionery products comprising high amount of water, as explained in the examples. This is due to the fact that the final product is still a combination of aqueous phase droplets and particles dispersed in the fat phase.

The product as described above and obtained by this process preferably has a calorie content of between 100 and 300 kcal / 100 g of final product, a fat content of 6-20%, and a water content of 60-90%.

In another embodiment of the present invention, the low-fat confectionery is made of a combination of the emulsion as described above, and of a co-suspension as described in our co-pending patent application NO 7883/WO.

### Examples

The following examples further illustrate some embodiments of the present invention, and should not be considered as limiting the scope of the invention.

### Example 1: water in oil emulsion with cocoa powder

| Composition | % |
|---|---|
| Cocoa butter | 9.5% |
| Sucrose ester ER 190 | 2.0% |
| Cocoa powder 10-12 | 5.0% |
| Water | 42.175% |
| Carrageenan | 1.0% |
| Sugar | 40.0% |
| Sorbate potassium | 0.2% |
| Citric acid | 0.1% |
| Vanillin | 0.025% |
| Total | 100.0% |

All aqueous ingredients (water, carrageenan, sugars, potassium sorbate, citric acid) are mixed together until a complete dissolution and dispersion of the components. Then the obtained aqueous phase is heated at 85°C for 15 minutes to ensure hydration of the carrageenan.
Separately fat phase is prepared at 65°C by mixing together fat, the emulsifier sucrose ester ER-190 and vanillin.
Emulsification is then done by mixing with a Bamix hand-mixer and adding the aqueous phase to the fat phase. When all aqueous phase has been added to the fat phase, the obtained emulsion is cooled down at 30°C and stored at this temperature for 30 minutes. At this temperature aqueous phase droplets are structured and rigid.
Cocoa powder can then be added without destruction of the emulsion. Moreover addition of cocoa powder at this temperature allows to temper the cocoa butter mass as crystal seeds of cocoa butter present in cocoa powder are sufficient to ensure crystallization of cocoa butter in the right crystalline form.
The obtained mass is then ready to be used as a component to make a confectionery product.

### Example 2: water-in-oil emulsion with cocoa liquor

| Composition | % |
|---|---|
| Cocoa butter | 6.0% |
| Sucrose ester ER 190 | 2.0% |
| Cocoa liquor | 8.0% |
| Water | 42.675 % |
| Carrageenan | 1.0% |
| Sugar | 40.0% |
| Sorbate potassium | 0.2% |
| Citric acid | 0.1% |
| Vanillin | 0.025% |
| Total | 100.0% |

Same procedure is used as in example 1. The exception is the addition of cocoa liquor in the last stage of the process instead of cocoa powder at 30°C. Cocoa liquor has been previously tempered on the marble to produce the right amount of cocoa butter crystal seeds according to the standard procedure followed by a professional in confectionery.

### Example 3: water-in-oil emulsion with cocoa liquor

| Composition | % |
|---|---|
| Cocoa butter | 6.0% |
| Sucrose ester ER 190 | 2.0% |
| Cocoa liquor | 8.0% |
| BOB seeds | 1.0% |
| Water | 43.675%? |
| Carrageenan | 1.0% |
| Sugar | 38.0 % |
| Sorbate potassium | 0.2% |
| Citric acid | 0.1 % |
| Vanillin | 0.025% |
| Total | 100.0% |

Same procedure is used as in example 2. The exception is that cocoa liquor is not tempered beforehand but is added together with 1% BOB crystal seeds (*Chocoseed* Fuji Oil).

### Example 4: water-in-oil emulsion with SSL

Same emulsion is made as in example 1, but where 0.2% of water is replaced by an emulsifier, sodium stearoyl lactylate.
Obtained texture is even smoother and creamier than example 1.

### Example 5: comparative example

| Composition (% w/w) | A | B |
|---|---|---|
| Cocoa butter | 8% | 8% |
| Cocoa liquor | 8% | 8% |
| BOB seeds | 1% | 1% |
| PGPR | 2% | 2.0% |
| Sugar | 10% | 10% |
| Carrageenan | 0% | 1.5% |
| Water | To 100% | To 100% |
| Total | 100.0% | 100.0% |

Preparation of 600 g of sample A and B: sugar and possibly carrageenan (only for B) were mixed with water at ambient temperature in a beaker with a rotating blade. After covering it, the mix was heated at 85°C and let at this temperature for 30 minutes. Cocoa butter and PGPR were mixed in a batch crystallizer with a rotating blade, at a temperature of 75°C. Emulsification was done at this temperature, by adding slowly the aqueous phase to the fat phase in the same mixer kept at 75°C, with the blade turning at 150 rpm. Then temperature was brought down to 30°C (at 10°C/min, blade turning at 60 rpm) and let at this temperature for 30 min, with the same mixing. Cocoa liquor first melted and mixed with BOB seeds was added at 30°C to the mix. Samples were then taken and put in a fridge at 5°C.

One week later, penetration tests were used to determine firmness of the samples with a TA-HD texture analyzer (Stable Micro System). A cylindrical probe penetrates into the sample at a constant speed until a fixed chosen depth into the sample, contained in a small box. The probe has a geometry of 11mm diameter (contact area = 95.033mm2) and a weight of 50g. The sequence used was two successive penetrations of 5mm at 1mm/s. the force applied to the probe was recorded as function of time. The highest strength obtained during the penetration represented the firmness. Those tests were achieved in triplicate. 30 g samples were put in plastic boxes (35 mm diameter cylinder, 28 mm height).

Sample B has a hardness of 7.1 kg while sample A has a hardness of 6.1 kg, due to the rigid gelled droplets in the case of sample B.

## Claims

1. Low-fat confectionery product consisting of a water-in-oil emulsion wherein the aqueous phase represents at least 60% of the final product and the fat phase at most 20%, the water-in-oil emulsion further comprising cocoa particles dispersed in the fat phase and at least a structuring agent,
wherein the structuring agent is taken from the group consisting in polysaccharides and proteins, or both.

2. Low fat confectionery product according to claim 1 wherein the product comprises SSL.

3. Process for manufacturing a low fat confectionery product according to one of claims 1 or 2, comprising the steps of:
a) Mixing of the ingredients of the aqueous phase below 40°C
b) Heating of the aqueous phase at a temperature above 50°C, preferably at a temperature greater than 70°C,
c) Emulsification of the aqueous phase in the fat phase at a temperature above ambient, preferably at a temperature equal or greater than 50°C
d) Cooling the water-in-oil emulsion at a temperature above ambient
e) Adding particles in the fat phase.

## Patentansprüche

1. Fettarmes Süßwarenprodukt, bestehend aus einer Wasser-in-ÖI-Emulsion, wobei die wässrige Phase mindestens 60 % des Endprodukts und die Fettphase höchstens 20 % ausmacht, wobei die Wasser-in-ÖI-Emulsion ferner in der Fettphase dispergierte Kakaoteilchen und mindestens ein strukturierendes Mittel umfasst,
wobei das strukturierende Mittel aus der Gruppe, bestehend aus Polysacchariden und Proteinen, oder beidem, ausgewählt ist.

2. Fettarmes Süßwarenprodukt nach Anspruch 1, wobei das Produkt SSL umfasst.

3. Verfahren zum Herstellen eines fettarmen Süßwarenprodukts nach einem der Ansprüche 1 oder 2, das die folgenden Schritte umfasst:
a) Mischen der Inhaltsstoffe der wässrigen Phase bei unter 40 °C,
b) Erhitzen der wässrigen Phase bei einer Temperatur von über 50 °C, vorzugsweise bei einer Temperatur von mehr als 70 °C,
c) Emulgieren der wässrigen Phase in die Fettphase bei einer Temperatur über Umgebungstemperatur, vorzugsweise bei einer Temperatur von gleich oder mehr als 50 °C,
d) Kühlen der Wasser-in-ÖI-Emulsion bei einer Temperatur über Umgebungstemperatur,
e) Zugeben von Teilchen in die Fettphase.

## Revendications

1. Produit de confiserie à faible teneur en matières grasses, constitué d'une émulsion eau-dans-huile, dans lequel la phase aqueuse représente au moins 60 % du produit final et la phase grasse au plus 20 %, l'émulsion eau-dans-huile comprenant en outre des particules de cacao dispersées dans la phase grasse et au moins un agent structurant,
dans lequel l'agent structurant est pris dans le groupe constitué de polysaccharides et de protéines, ou des uns et des autres.

2. Produit de confiserie à faible teneur en matières grasses selon la revendication 1, dans lequel le produit comprend du stéaroyl lactylate de sodium (SSL).

3. Procédé de fabrication d'un produit de confiserie à faible teneur en matières grasses selon l'une des revendications 1 ou 2, comprenant les étapes de :
a) mélange des ingrédients de la phase aqueuse en dessous de 40 °C
b) chauffage de la phase aqueuse à une température au-dessus de 50 °C, de préférence à une température supérieure à 70 °C,
c) émulsification de la phase aqueuse dans la phase grasse à une température au-dessus de la température ambiante, de préférence à une température égale ou supérieure à 50 °C
d) refroidissement de l'émulsion eau-dans-huile à une température au-dessus de la température ambiante
e) ajout de particules dans la phase grasse.
